# EUROPEAN PATENT APPLICATION

(11) **EP 3 312 517 A1**
(43) Date of publication of application: **25.04.2018**
(21) Application number: 17196172.5
(22) Date of filing: 12.10.2017
(51) Int. Cl.: F24D 17/00, F16L 39/00

(54) **SYSTEM FOR HOT WATER CIRCULTION AND METHOD THEREFORE**

(30) Priority: 18.10.2016 SE 1651362
(71) Applicant: Hammardal Bygg & VVS AB, 141 37 Huddinge (SE)
(72) Inventor: MAJSTAM, Kim, 141 37 Huddinge (SE)
(74) Representative: Ehrner & Delmar Patentbyrå AB

(57) **Abstract**

The invention relates to a method and a system for providing hot water circulation in an existing hot water piping system of a multi-story building. The system comprises a first branch coupling (2) connected to a hot water supply pipe (1) at a second-top story. An internal hot water pipe (4) is arranged inside said hot water supply pipe (1) for providing a return flow of hot water, an upper end (12) of which is connected to a first part (13, 13') of an attachment means (3, 3'). A second part (14, 14) of said attachment means (3, 3') being adapted to sealingly extend through said first branch coupling (2) and being attached thereto and hermetically sealed to the surroundings. At least one through hole (15) is provided in said first part (13, 13'). A second branch coupling (20) is connected to said hot water supply pipe (1) before a first hot water tap (16), through which a return flow of hot water is taken out.

## Description

### Field of the invention

The invention relates to a system for hot water circulation according to the preamble of claim 1 and to a method according to claim 11.

### Background of the invention

SE 521 197 discloses a method and an apparatus for providing hot water circulation in a building by using a flow tube consisting of two tubes, one inside the other, below called pipe-in-pipe. Liquid is circulated through the tubes so that it is taken through the outer tube against the end of a branch tube. The return flow is from the end of the flow tube through the inner tube. When the tap is opened at a consumption point, water of the required temperature can be obtained.

DE 29821347 U1 discloses a system for providing hot water circulation in an existing hot water piping system of a multi-story building, comprising a hot water supply pipe extending from a lowest story to a top story of the multi-story building and providing a flow of hot water to a plurality of hot water outlets.

However, in particularly in connection with providing hot water circulation of the type pipe-in-pipe in an existing multi-story building, a problem exists how to attach the upper end of the internal hot water pipe/return pipe to the hot water supply pipe so as to not reduce the return flow of hot water through said internal hot water pipe, i.e. the diameter of the internal hot water pipe.

It is known to attach the upper end of an internal hot water pipe to the hot water supply pipe by using the same connection as is used for installing a heating cable inside a pipe for preventing the water in the pipe form being frozen in wintertime.

However, by using such a connection, the diameter of the internal hot water pipe is very limited and can therefore not be used for providing hot water circulation of the type pipe-in-pipe in an existing multi-story building, and this problem is particularly increased in the case the building consists of four or more stories.

Another problem is that it is not possible to make a new installation at an already existing system for hot water circulation of the type pipe-in-pipe, i.e. it is not possible to cut off the hot water supply pipe and thereby the internal hot water pipe to make a branching, for instance, in case the upper end of the internal hot water pipe is not attached in a proper way.

### Object of the invention

An object of the invention is to make possible hot water circulation in an existing hot water supply pipe by attachment of the upper end of an internal hot water pipe to the existing hot water supply pipe without reduce the return flow of hot water through said internal hot water pipe.

According to the invention this object is achieved by a system for providing hot water circulation in an existing hot water piping system of a multi-story building, comprising a hot water supply pipe extending from a lowest story to a top story of said multi-story building and providing a flow of hot water to a plurality of hot water taps, characterized in that said system comprises a first branch coupling arranged to be connected to said hot water supply pipe at a second-top story, that an internal hot water pipe is arranged inside said hot water supply pipe for providing a return flow of hot water, an upper end of the internal hot water pipe is connected to a first part of an attachment means, a second part of said attachment means being adapted to sealingly extend through said first branch coupling and being attached thereto and hermetically sealed to the surroundings, that at least one through hole is provided in said first part of said attachment means enabling fluid communication between said hot water supply pipe and said internal hot water pipe, that a second branch coupling is connected to said hot water supply pipe before a first hot water tap, through which second branch coupling said return flow of hot water is adapted to be taken out, and that said first branch coupling is a T-coupling.

This object is also achieved a method for providing hot water circulation in an existing piping system of a multi-story building as stated below.

Preferred embodiments are defined in the dependent claims.

### Brief description of the drawings

The invention is described in more detail below with reference being made to a non-limiting example shown on the appended drawings, in which
- Fig. 1 is a schematic sectional side view of the system of the invention,
- Fig. 2 is an enlarge sectional side view of a first branch coupling connected to an existing hot water supply pipe provided with an attachment means according to a first embodiment,
- Fig. 3 is an enlarged side view of the attachment means shown in Fig. 2,
- Fig. 4 is a side view of an output pipe means,
- Fig. 5 is a front view of an attachment means according to a second embodiment, and
- Fig. 6 is a side view of the attachment means shown in Fig. 5.

### Description of preferred embodiments

The system according to the invention is adapted to be installed in an existing hot water piping system of a multi-story building having preferably but not necessary four or more stories.

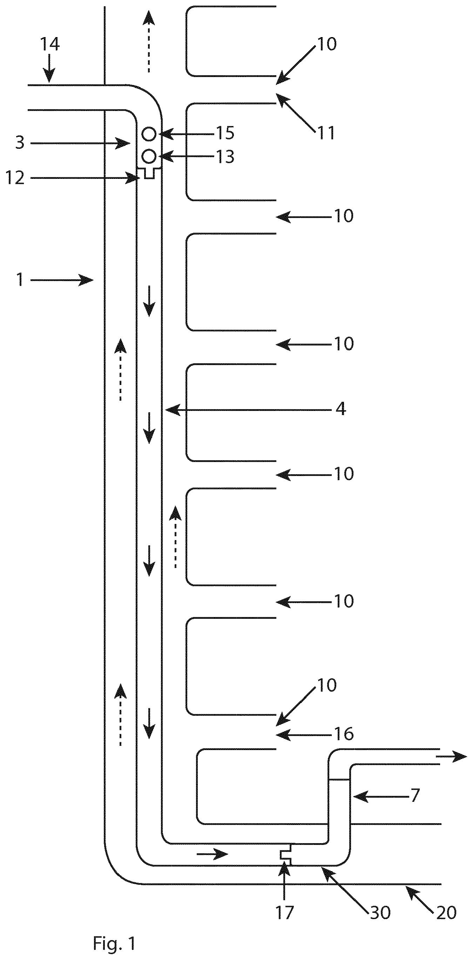

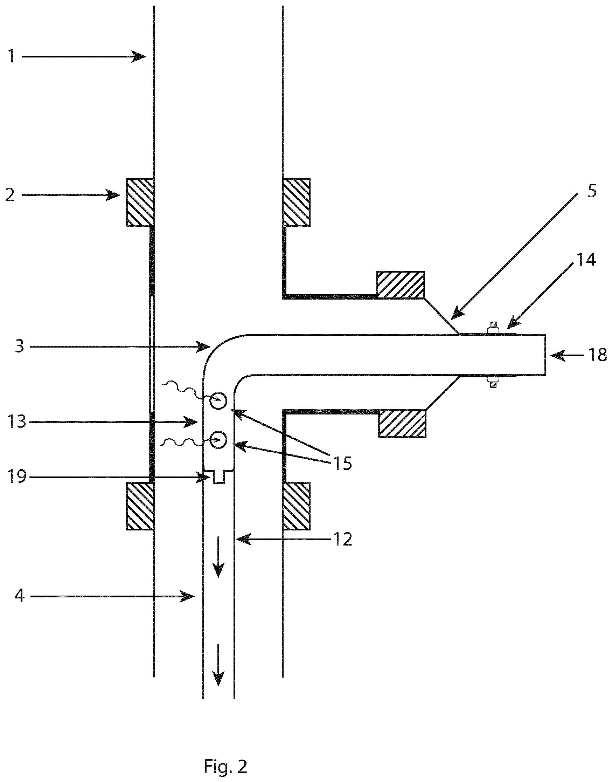

As disclosed in Fig. 1 and 2, a system for providing hot water circulation in an existing hot water piping system of a multi-story building according to the invention comprises a hot water supply pipe 1 extending from a lowest story to a top story (not shown) of said multi-story building (not shown) and providing a flow of hot water, indicated by dash lined arrows, to a plurality of hot water taps/consumption points 10, a first branch coupling 2 arranged to be connected to said hot water supply pipe 1 at a second-top story 11, an internal hot water pipe 4 arranged inside said hot water supply pipe 1 for providing a return flow of hot water, indicated by unbroken line arrows, wherein an upper end 12 of the internal hot water pipe 4 is connected to a first part 13 of an attachment means 3, and second part 14 of said attachment means 3 is adapted to sealingly extend through said first branch coupling 2 into the air/surroundings and being attached thereto and hermetically sealed to the surroundings by a sealing 5. The first part 13 of said attachment means 3 is provided with at least one through hole 15 enabling fluid communication between said hot water supply pipe 1 and said internal hot water pipe 4. The flow of hot water from said hot water supply pipe 1 and said internal hot water pipe 4 is shown by arrows in figures 1 and 2.

The system further comprises a second branch coupling 20 which is connected to said hot water supply pipe 1 anywhere before a first hot water tap 16. A return flow of hot water by the internal hot water pipe 4 is adapted to be taken out through said second branch coupling 20.

The return flow of hot water may be taken out from said second branch coupling 20 in different ways. One way is by connecting an output pipe means 30 to a lower end 17 of said internal hot water pipe 4, whereby said output pipe means 30 extends sealingly through said second branch coupling 20 and is connected to suitable means for obtaining hot water circulation. Another way is to let the lower end 17 of said internal hot water pipe 4 sealingly extend through said second branch coupling 20, whereby no output pipe means 30 is provided. As above, said lower end 17 is connected to suitable means for obtaining hot water circulation.

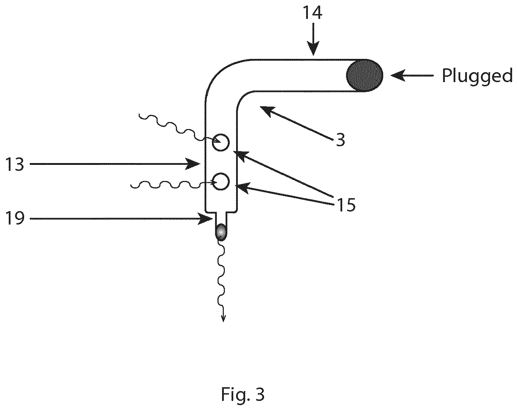

In a first embodiment of said attachment means 3 as shown in Fig. 2, said attachment means 3 is formed of a solid piece of material, preferably in the form of a pipe/conduit, having a first part 13 placed in and extending in the longitudinal direction of the hot water supply pipe 1 and a second part 14 angled in about 90° to said first part 13. A longitudinal channel (not shown) is formed in said first part extending from a connecting portion 19 to at least one through hole 15 formed in the first part 13 so as to provide a fluid communication between said connecting portion 19 and said at least one through hole 15. The connecting portion 19 is adapted to be connected to the upper end 12 of the internal hot water pipe 4. The second part 14 is adapted to be sealed by sealing 5 to first branch coupling 2 and to protrude through said first branch coupling into the air/surroundings and has a closed/plugged end 18. See Fig. 3.

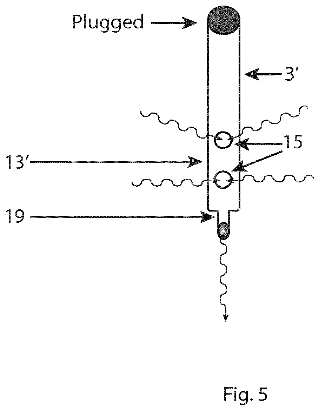

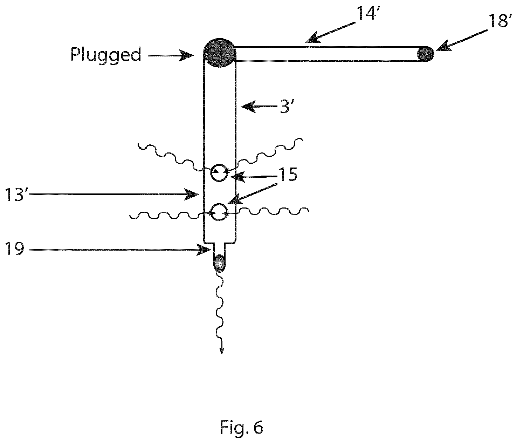

In Figs. 5 and 6 a second embodiment of an attachment means 3' is shown. This attachment means 3' is particularly used for providing hot water circulation when the existing hot water supply pipe 1 has a relatively small diameter. A first part 13' of said attachment means 3' is formed in the same way as the first part 13 of the attachment means 3, but a second part 14' of said attachment means 3' is formed as a loose, preferably rod-shaped, solid piece of material which, after first part 13' has been attached to the upper end 12 of the internal hot water pipe 4, is brazed to the first part 13' inside the hot water supply pipe 1 at an angle of about 90° to the longitudinal direction of the first part 13'. The second part 14' is adapted to be sealed by sealing 5 to first branch coupling 2 (see Fig. 2) and to protrude through said first branch coupling into the air/surroundings and has a closed/plugged end 18'.

As can be inferred from the above, the attachment means 3, 3' may be formed in any suitable way as long as the second part 14, 14' is sealingly connected to the first branch coupling 2 and has a closed/sealed end 18, 18' preventing any air from entering into the first part 13, 13' of the attachment means 3, 3' and into the hot water supply pipe 1, and the first part 13, 13' is connected to the internal hot water pipe 4 and enabling a circulation of water between the internal hot water pipe 4 and the hot water supply pipe 1.

As an example, the first part 13, 13' of said attachment means 3, 3' has a length of 40 mm to 100 mm, preferably 60 mm to 80 mm, and the second part 14, 14' of said attachment means 3, 3' has a length of 40 mm to 100 mm, preferably 60 mm to 80 mm. The first part 13, 13' of the attachment means 3, 3' has preferably an external diameter of 12 mm to 35 mm. A diameter of the connecting portion 19 of said first part 13, 13' of the attachment means 3, 3', which is to be connected to the upper end 12 of the internal hot water pipe 4, has preferably an external diameter of 4 mm to 18 mm, and more particularly 6 mm to 16 mm.

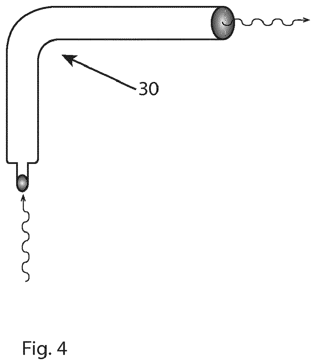

Fig. 4 is a side view of the output pipe means 30 which preferably has the same measures as the attachment means 3 and the first part 13' of the attachment means 3', but hot water is adapted to flow through said output pipe means 30.

The cross section area of said at least one through hole 15 is preferably smaller than the internal cross section area of the said internal hot water pipe 4 so as to allow sufficient flow of hot water in said internal hot water pipe 4, i.e. so that when more than one through hole 15 is provided the combined cross section area of said through holes should be larger than the internal cross section area of said internal hot water pipe 4. As an example said at least one through hole has a diameter of 2 mm to 12 mm, preferably 6 mm to 10 mm, and most preferably about 8 mm.

In a non-limiting example, the internal diameter of said internal hot water pipe 4 is within the interval of between 9 mm to 38 mm.

In a preferred embodiment, the first branch coupling 2 is a T-coupling 2, and the attachment means 3, 3' for the internal hot water pipe 4 is formed as mentioned-above with, in the first embodiment, a bend of about 90° at about 1/3 to 2/3 of the total length of said attachment means as seen from the connecting portion 19 of said first part 13 of the attachment means 3 and, in the second embodiment, the length of said first part 13' of the attachment means 3' is about 1/3 to 2/3 of the total length of said attachment means as seen from the connecting portion 19.

It should be noted that the external diameter of the connecting portion 19 of said first part 13, 13' of said attachment means 3, 3' is adapted to the internal diameter of said upper end 12 of the internal hot water pipe 4.

Moreover, the internal hot water pipe 4 is preferably a flexible hose having suitable properties for being fitted into the hot water supply pipe 1.

The flow of hot water from said hot water supply pipe 1 to said internal hot water pipe 4 via said first part 13, 13' of the attachment means 3, 3' is achieved by a suitable pump means (not shown).

The invention relates also to a method for providing hot water circulation in an existing piping system of a multi-story building, comprising a hot water supply pipe 1 extending from a lowest story to a top story of said multi-story building and providing a flow of hot water to a plurality of hot water taps 10. The method is characterized by:
- providing a first branch coupling 2,
- connecting said first branch coupling 2 to said hot water supply pipe 1 at a second-top story 11,
- arranging an internal hot water pipe 4 inside said hot water supply pipe 1 for providing a return flow of hot water,
- connecting an upper end 12 of said internal hot water pipe 4 to a first part 13, 13' of an attachment means 3, 3', a second part 14, 14' of said attachment means 3, 3' being adapted to sealingly extend through said first branch coupling 2 and being attached thereto and hermetically sealed to the surroundings,
- providing at least one through hole 15 in said first part 13, 13' of said attachment means 3, 3' enabling fluid communication between said hot water supply pipe 1 and said internal hot water pipe 4, and
- connecting a second branch coupling 20 to said hot water supply pipe 1 before a first hot water tap 16, through which second branch coupling 20 said return flow of hot water is taken out.

As can be inferred from the above description hot water circulation is not provided by the inventive system to the top story of a multi-story building, but up to the second-top story.

In Figs. 3, 5 and 6, respectively, the black dot indicate that the end is sealed/plugged.

## Claims

1. A system for providing hot water circulation in an existing hot water piping system of a multi-story building, comprising a hot water supply pipe (1) extending from a lowest story to a top story of said multi-story building and providing a flow of hot water to a plurality of hot water taps (10), **characterized in that** said system comprises a first branch coupling (2) arranged to be connected to said hot water supply pipe (1) at a second-top story, that an internal hot water pipe (4) is arranged inside said hot water supply pipe (1) for providing a return flow of hot water, an upper end (12) of the internal hot water pipe (4) is connected to a first part (13, 13') of an attachment means (3, 3'), a second part (14, 14) of said attachment means (3, 3') being adapted to sealingly extend through said first branch coupling (2) and being attached thereto and hermetically sealed to the surroundings, that at least one through hole (15) is provided in said first part (13, 13') of said attachment means (3, 3') enabling fluid communication between said hot water supply pipe (1) and said internal hot water pipe (4), that a second branch coupling (20) is connected to said hot water supply pipe (1) before a first hot water tap (16), through which second branch coupling (20) said return flow of hot water is adapted to be taken out, and that said first branch coupling (2) is a T-coupling (2).

2. The system according to claim 1, **characterized in that** said return flow of hot water is taken out from said second branch coupling (20) by connecting an output pipe means (30) to a lower end (17) of said internal hot water pipe (4), said output pipe means (30) extends sealingly through said second branch coupling (20).

3. The system according to claim 1, **characterized in that** said return flow of hot water is taken out from said second branch coupling (20) by letting a lower end (17) of said internal hot water pipe (4) sealingly extend through said second branch coupling (20).

4. The system according to any one of the preceding claims, **characterized in that** a cross section area of said at least one through hole (15) is smaller than an internal cross section area of the said internal hot water pipe (4).

5. The system according to any one of the preceding claims, **characterized in that** an internal diameter of said internal hot water pipe (4) is in the interval of between 9 to 38 mm.

6. The system according to any one of claims 1-4, **characterized in that** said at least one through hole (15) has a diameter of 2 to 12 mm, preferably 6 to 10 mm, and most preferably about 8 mm.

7. The system according to any one of preceding claims, **characterized in that** said attachment means (3) is formed with a bend of about 90° at about 1/3 to 2/3 of the total length of said attachment means (3) as seen from a connecting portion (19) of said first part (13) of the attachment means (3).

8. The system according to claim 7, **characterized in that** the external diameter of connecting portion (19) of said first part (13) of the attachment means (3) is adapted to the internal diameter of said upper end (12) of the internal hot water pipe (4).

9. The system according to any one of preceding claims, **characterized in that** said internal hot water pipe (4) is a flexible hose.

10. The system according to any one of the preceding claims, **characterized in that** said system is adapted to be installed in an existing hot water piping system of a multi-story building having four or more stories.

11. Method for providing hot water circulation in an existing piping system of a multi-story building, comprising a hot water supply pipe (1) extending from a lowest story to a top story of said multi-story building and providing a flow of hot water to a plurality of hot water taps (10), **characterized by**
- providing a first branch coupling (2) in the form of a T-coupling (2),
- connecting said first branch coupling (2) to said hot water supply pipe (1) at a second-top story (11),
- arranging an internal hot water pipe (4) inside said hot water supply pipe (1) for providing a return flow of hot water,
- connecting an upper end (12) of said internal hot water pipe (4) to a first part (13) of an attachment means (3), a second part (14) of said attachment means (3) being adapted to sealingly extend through said first branch coupling (2) and being attached thereto and hermetically sealed to the surroundings,
- providing at least one through hole (15) in said first part (13) of said attachment means (3) enabling fluid communication between said hot water supply pipe (1) and said internal hot water pipe (4), and
- connecting a second branch coupling (20) to said hot water supply pipe (1) before a first hot water tap (16), through which second branch coupling (20) said return flow of hot water is taken out.
